## Europäisches Patentamt
## European Patent Office
## Office européen des brevets

(11) Numéro de publication : **0 250 340 B1**

(12) **FASCICULE DE BREVET EUROPEEN**

(45) Date de publication du fascicule du brevet :
07.08.91 Bulletin 91/32

(51) Int. Cl.$^5$ : **G09F 3/00, // G06K1/12**

(21) Numéro de dépôt : **87420150.2**

(22) Date de dépôt : **12.06.87**

(54) **Procédé de marquage individuel, des anodes précuites pour la production électrolytique d'aluminium.**

(30) Priorité : **19.06.86 FR 8609554**

(43) Date de publication de la demande :
**23.12.87 Bulletin 87/52**

(45) Mention de la délivrance du brevet :
**07.08.91 Bulletin 91/32**

(84) Etats contractants désignés :
**AT CH DE ES GB GR IT LI NL**

(56) Documents cités :
**FR-A- 2 258 690
FR-A- 2 556 867
GB-A- 2 124 967
US-A- 3 251 150
US-A- 4 342 549**

(73) Titulaire : **ALUMINIUM PECHINEY
23, rue Balzac
F-75008 Paris Cédex 08 (FR)**

(72) Inventeur : **Vanvoren, Claude
L'Echaillon-Hermillon
F-73300 St Jean De Maurienne (FR)**
Inventeur : **Jonville, Christian
L'Echaillon-Hermillon
F-73300 St Jean De Maurienne (FR)**

(74) Mandataire : **Pascaud, Claude et al
PECHINEY 28, rue de Bonnel
F-69433 Lyon Cédex 3 (FR)**

Jouve, 18, rue Saint-Denis, 75001 PARIS

## Description

### DOMAINE TECHNIQUE DE L'INVENTION

La présente invention concerne un procédé de marquage individuel des anodes précuites pour la production d'aluminium par électrolyse d'alumine dissoute dans de la cryolithe fondue à 930/960°C selon le procédé Hall-Héroult.

A l'heure actuelle, la grande majorité des installations modernes pour la production d'aluminium, dans le monde entier fait appel à la technique dite des "anodes précuites".

A partir d'une pâte carbonée à base de brai et de coke, malaxée à 120/200°C, on moule les anodes, généralement par vibro-tassage, on les cuit pendant une centaine d'heures environ à 1150/1200°C et on les raccorde ensuite, par scellement à la fonte, à un système de suspension dit "tige d'anode" qui assure le support mécanique et la liaison électrique avec le cadre anodique.

On sait que les anodes brûlent progressivement, à leur partie inférieure, sous l'effet de l'oxygène provenant de la dissociation électrolytique de l'alumine. Il faut donc les remplacer périodiquement.

Parmi les divers paramètres, électriques et électrochimiques que l'exploitant surveille et cherche à optimiser, la vitesse de combustion des anodes (c'est-à-dire en fin de compte, la consommation de carbone par tonne d'aluminium produit) est un des plus importants. Le changement périodique des anodes, même automatisé, reste une opération délicate, qui apporte quelques perturbations à la cuve d'électrolyse, car elle entraîne un refroidissement local du bain, et un déséquilibre local du courant d'électrolyse pendant toute la durée de mise en équilibre thermique de la nouvelle anode. On cherche donc à augmenter autant que faire se peut la durée de vie des anodes et également à augmenter leur conductivité électrique. Pour cela, l'exploitant peut jouer sur de nombreux paramètres : qualité du brai, qualité et granulométrie du coke, efficacité du malaxage, efficacité du mode de mise en forme par pression, ou par vibration, ou par choc, ou par combinaison de plusieurs de ces moyens, et enfin cuisson au four.

Pour faire une corrélation entre les caractéristiques d'une anode donnée et les facteurs qui ont conduit à ces caractéristiques, il serait souhaitable que, par un procédé quelconque, les anodes soient suivies du début à la fin de leur cycle d'existence.

### ETAT DE LA TECHNIQUE ANTERIEURE

A ce jour, diverses tentatives ont été réalisées pour identifier les anodes. Il s'est agit en général de gravure de numéro en cours ou après compactage de l'anode. Ce numéro apparaît en creux sur l'anode. Il peut s'agir d'un numéro de lot, par exemple hebdomadaire, ou d'un numéro individuel représentant une anode bien déterminée.

Cependant, ce marquage présente l'inconvénient majeur de ne pas permettre une relecture automatisée aux différentes étapes du cycle de vie de l'anode. En effet, outre que les dispositifs adéquats n'existent qu'à l'état de développement, les gravures souffrent en général lors de l'étape de cuisson des anodes, des déformations de surface de ces dernières, et de l'éventuelle incrustation de matériau de garnissage. La lecture du numéro devient alors délicate même pour un opérateur averti.

D'autre part, le marquage "par lots" n'est pas satisfaisant. En effet, une série moderne de 240 cuves à 16 anodes d'une durée de vie moyenne de 24 jours, par exemple, implique une production hebdomadaire de plus de 1100 anodes, et on peut craindre que, sur une telle période, les fluctuations des différents facteurs sur l'ensemble du cycle de production rendent peu significatives les différences de comportement individuel des anodes.

Une solution peut être trouvée avec un dispositif de marquage individuel d'articles produits par moulage ou compactage selon US-A-4342549 dans lequel, lors du compactage, on fait apparaître dans la partie supérieure de chaque article une pluralité d'empreintes en creux dont l'ensemble constitue un codage digital du numéro d'identification de chaque article. Toutefois, il convient que le procédé de marquage individuel des anodes, sans perturber ni retarder la chaîne de production reste lisible et fiable pour détecter toute anomalie depuis l'étape "crue" jusqu'au traitement ultime du mégot d'anode dans le chantier de scellement en passant par l'étape d'électrolyse pendant laquelle le marquage individuel d'anode n'est pas accessible. C'est ce que permet de réaliser le procédé selon l'invention.

### OBJET DE L'INVENTION

Il s'agit d'un procédé de marquage individuel des anodes précuites pour la production d'aluminium par électrolyse selon le procédé Hall-Heroult, ce marquage restant lisible depuis le stade de mise en forme de l'anode (1) par compactage à chaud de la pâte carbonée jusqu'à l'opération finale de récupération des composés du mégot d'anode usée, retiré de la cuve d'électrolyse, comportant lors du compactage ou immédiatement après ce compactage, la réalisation dans la partie supérieure de chaque anode d'un marquage sous forme d'une pluralité d'empreintes, en creux et/ou en relief dont l'ensemble constitue un codage digital du numéro d'identification de chaque anode caractérisé en ce que dans le but de lire ce marquage rendu non accessible pendant l'électrolyse on le complète au moyen d'un marquage de contrôle par une répétition du numéro d'identification de chaque anode sur la tige de suspension de cette anode (1) sous forme par exemple de code à barres à lecture optique et en ce que par sécurité d'utilisation, on compare la lecture du marquage sur chaque anode avec celle du marquage de contrôle sur la tige de suspension de cette anode de façon à déclencher une alarme en cas de discordance entre les 2 lectures.

## DESCRIPTION DES FIGURES

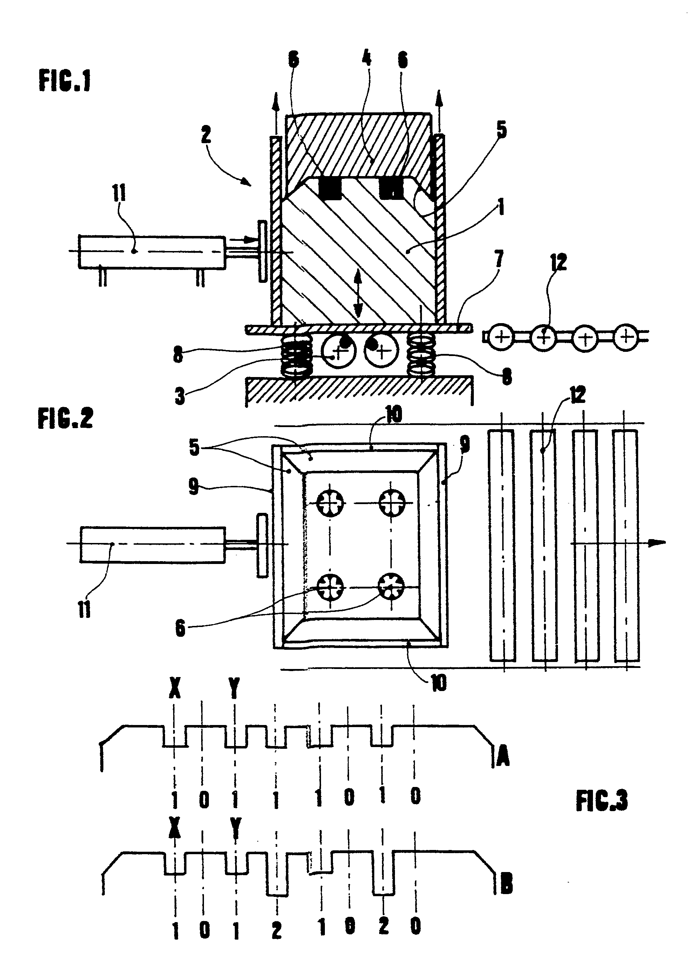

Les figures 1 à 8 illustrent la mise en oeuvre de l'invention.

. La figure 1 représente, de façon très schématique, en coupe verticale, un dispositif classique de mise en forme d'anode par vibrotassage.

. La figure 2 représente ce même dispositif en vue de dessus, couvercle du moule enlevé.

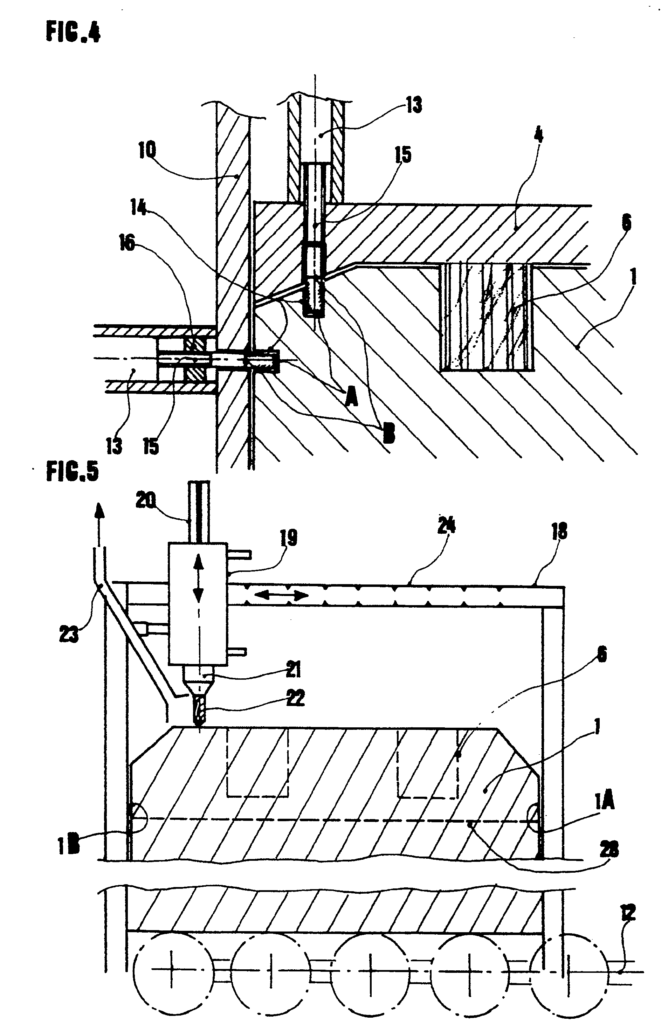

. La figure 3 représente un exemple de marquage d'anode selon l'invention, en système binaire (A) et en système ternaire (B).

. La figure 4 représente en coupe verticale un exemple de réalisation d'empreintes au moment du moulage de l'anode.

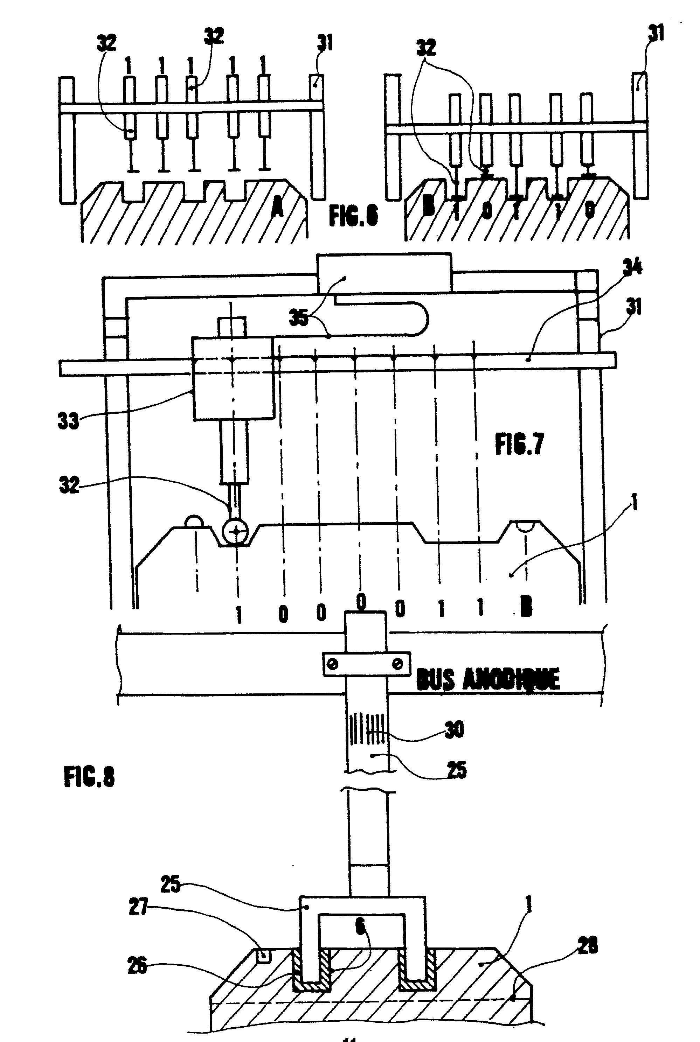

. La figure 5 représente un dispositif de formation d'empreintes de marquage par forage de l'anode moulée.

. La figure 6 montre un dispositif de lecture sumultanée de n empreintes par un système à palpeurs.

. La figure 7 montre un exemple de dispositif de lecture séquentielle des n empreintes.

. La figure 8 montre le marquage complémentaire de la tige d'anode associée à une anode donnée, elle-même porteuse d'un marquage individuel.

La mise en forme d'une anode (1) (souvent appelé compactage) s'effectue, par introduction d'une quantité prédéterminée de pâte carbonée dans le moule (2) à une température qui est généralement de l'ordre de 140°C. Le compactage peut s'effectuer par différents moyens connus de l'homme de l'art. Dans le cas des figures 1 et 2 on a schématisé un compactage par "vibro-tassage" dans lequel on associe une vibration à composante sensiblement verticale créée par deux arbres rotatifs à balourd excentré, symbolisés par (3), en opposition de phase, à un effet de tassage par chocs répétés dus aux mouvements du couvercle (4) généralement appelé "empreinte" qui saute sous l'action de la vibration et retombe sous l'effet de son propre poids (qui doit être relativement élevé), 2 à 4 tonnes par exemple.

L'empreinte (4) assure, en même temps, la structure de la partie supérieure de l'anode (1) avec, notamment, ses pans coupés (5) et ses trous de bouchons (6) dans lesquels s'effectuera ultérieurement le scellement à la fonte des pattes qui se raccordent à la tige de fixation anodique, comme on peut le voir sur la figure 8.

Le moule est disposé sur une table vibrante (7), qui en forme le fond. Cette table est supportée élastiquement par les ressorts (8). Le moule comporte 4 parois dont, en général, deux (parois transversales (9)) sont amovibles et deux (parois latérales (10)) sont fixes.

En position de vibro-tassage, les deux parois amovibles (9) sont solidement verrouillées et maintenues par des moyens mécaniques et/ou hydrauliques, non représentés, car ils ne font pas partie de l'invention.

Après une durée de vibro-tassage prédéterminée, fixée par l'expérience (de l'ordre de 1 à 2 minutes), les parois (9) sont dégagées et un vérin (11) pousse l'anode moulée (1) vers le convoyeur, par exemple à rouleaux (12), en direction d'un stockage intermédiaire, en vue de la cuisson au four.

Le marquage individuel des anodes par la série d'empreintes qui vont constituer le codage digital de leur numéro d'identification, peut s'effectuer soit pendant le vibro-tassage, soit immédiatement après.

Nous examinerons en premier lieu les différents types d'empreintes de marquage que l'on peut utiliser, puis les moyens de les réaliser, et les moyens de les relire.

## 1. Types d'empreintes

Le marquage digital binaire est certainement le plus simple à mettre en oeuvre, puisqu'il suffit de former un creux ou une bosse dans l'anode pour coder un 1 (par exemple) et de prendre le plan d'origine de la zone de marquage comme niveau O. Mais 8 digits ne permettent de coder que 255 positions, ce qui est trop peu, sachant qu'une série moderne de 240 cuves de 180 KA consomme plus de 1100 anodes par semaine. Si l'on veut en outre ajouter un bit de parité et un ou plusieurs bits de contrôle pour s'assurer du bon positionnement de l'anode lors des phases ultérieures de relecture et suivre les fabrications d'anodes sur plusieurs mois, il faut passer à au moins 16 bits (65536 valeurs + 1 bit de parité, soit 17 empreintes de marquage).

Une autre solution peut consister en un codage ternaire tel que : creux = 0, plan de référence = 1, bossage = 2, ou toute autre combinaison telle que : creux de profondeur $2h = 2$, creux de profondeur $h=1$, plan de base (ou bossage) = 0. Dans ce cas, 10 empreintes de marquage donnent $3^{10} = 59049$ valeurs, plus une onzième empreinte de contrôle de parité.

Il ne s'agit que d'exemples qui ne constituent pas une limitation de l'invention.

La réalisation pratique des empreintes de marquage s'effectue automatiquement, et sans réduire la cadence de production des anodes, soit en cours de compactage, soit immédiatement après compactage de chaque anode.

## 2. Marquage en cours de compactage

Une série de vérins (13), en nombre égal à celui des empreintes de marquage à faire apparaître sur l'anode (1) en cours de compactage, sont assujettis soit sur le couvercle (4), soit à la partie supérieure de la cloison fixe (10). Un embout (14) en acier dur est fixé à l'extrémité de la tige (15) du vérin. L'avance de la tige (15) peut s'effectuer par translation, ou, mieux, par rotation dans le logement fileté (16) qui traverse la paroi (16) ou le couvercle (4), ce qui assure un blocage plus énergique et plus stable, surtout si l'on tient compte de l'amplitude et de la fréquence des vibrations qui animent le moule.

L'embout (14) a, dans le cas d'un marquage binaire, au moins deux positions stables : la position A : embout faisant saillie à l'intérieur du moule, et la position B affleurant la paroi du moule. Dans le premier cas, on forme une empreinte en creux, dans le second cas, aucune empreinte ne se forme dans l'anode. Pour un marquage ternaire, une troisième position correspond par exemple à la formation d'une empreinte de creux de profondeur double de la première. Il est également possible de former des empreintes en relief, en disposant des réserves en creux sur l'une des parois du moule ou sous le couvercle (4).

Dans les différents cas, la commande des vérins (qu'ils soient à mouvement de translation ou de rotation) est effectuée par l'intermédiaire d'un microprocesseur qui, à partir du numéro décimal attribué séquentiellement à chaque anode moulée, assure la conversion en système binaire ou ternaire ou autre et active les vérins assurant la formation de l'ensemble des empreintes formant le code individuel de chaque anode. Ce code peut comporter, par exemple, la date, l'heure et/ou un numéro séquentiel d'identification de l'anode, plus un repère (X, y, fig. 3A et B) permettant de positionner correctement l'anode lors de l'étape de relecture.

## 3. Marquage après compactage

Un autre moyen pour former les empreintes de marquage, mais cette fois hors du moule, consiste à forer les différentes empreintes dans l'anode moulée, qui est à une température de l'ordre de 130 à 150°C.

L'anode (1),fig.5, est d'abord immobilisée dans une position prédéterminée. Un cadre rigide (18) supportant un dispositif de forage (19) vient s'appuyer sur deux faces opposées (1A,1B) de l'anode pour fixer la position de travail. Le dispositif de forage, supporté par la glissière ou crémaillère (20) peut effectuer un mouvement de montée-descente. Il est muni d'un mandrin (21) dans lequel est serré un outil de forage, tel que fraise ou foret. Le tube (23), est relié à un moyen d'aspiration des débris de pâte carbonée résultant du forage des empreintes.

L'ensemble foreuse (19) + crémaillère (20) se déplace en outre longitudinalement sur le rail (24). Les deux mouvements : descente puis remontée de la foreuse (19) pour forer une empreinte de marquage, puis déplacement d'un pas pour forer l'empreinte suivante sont commandés de façon classique par microprocesseur, de façon à reproduire sous forme digitale le numéro de l'anode assigné par le programme, ce numéro étant incrémenté d'un digit à chaque anode nouvelle.

Un codage binaire s'effectue par une succession de trous et d'absence de trous, un codage ternaire peut s'effectuer par forage de trous de deux profondeurs différentes, et absence de trous (0,1,2).

Pour une très grande cadence de production, le rail (24) est muni d'un nombre (N) de foreuses (19) pouvant aller jusqu'au nombre d'empreintes à forer. Chaque foreuse est munie de sa propre crémaillère (20) et les empreintes sont forées simultanément.

Quels que soient le procédé et le codage utilisés pour former les empreintes de marquage, il importe que ces empreintes soient formées dans une zone de l'anode qui restera intacte après son extraction de la cuve d'électrolyse et qui constituera le "mégot".

En pratique, on effectuera donc le marquage (27) dans la partie haute de l'anode, sur le sommet, sur les pans coupés (5) ou sur les rebords latéraux supérieurs, la limite étant indiquée de façon purement indicative par le trait pointillé (28), fig. 5.

## 4. Lecture des marquages

La lecture du marquage individuel des anodes par empreintes moulées ou forées est effectué, de préférence, par un palpeur mécanique, tel que celui qui est schématisé sur les figures 6 et 7. Un cadre rigide (31) analogue au cadre support (10) de l'outil de forage se positionne sur deux faces parallèles de l'anode.

Dans le cas de la figure 6, on effectue une lecture parallèle simultanée des n empreintes au moyen de n palpeurs (32) agissant soit en contact de proximité, soit en contact mécanique, en venant en appui sur les fonds des empreintes (ou un 1) ou sur le plan de référence (pour un 0). Dans le cas de la figure 7, on effectue une lecture séquentielle (série), par le déplacement par pas du détecteur (33) le long de la réglette (34). Le palpeur (32) détecte, à chaque pas, la présence ou l'absence d'un creux ou d'une bosse. Dans les deux cas (fig.6 et 7), le mouvement du palpeur est traduit en grandeur électrique par des procédés classiques tels que transformateur différentiel ou dispositif potentiométrique. La lecture analogique est convertie en valeur digitale puis décimale et le numéro d'anode est directement affiché, par exemple, sur un système de visualisation classique à 7 segments (35).

### 5. Report de marquage

Il est également possible, après scellement de l'anode (1) sur sa tige support (25) de reporter le numéro individuel de l'anode sur la tige, en partie haute, dans une zone où l'élévation de température reste limitée à une centaine de degrés au maximum. Ce double marquage constitue une sécurité et il permet aussi de savoir, à tout moment, pendant l'électrolyse (où le marquage de l'anode proprement dite n'est pas accessible), quel est le numéro de l'anode qui présente une anomalie ou un phénomène quelconque intéressant. Ce marquage (30) peut s'effectuer par une simple encre ou peinture résistant. à la température de service et aux conditions d'environnement, par exemple sous forme de "code à barres" ou de tout autre code analogue à lecture optique.

Le code (30) marqué sur la tige d'anode (25) doit bien entendu être effacé avant réutilisation de la tige sur une anode neuve.

Le dispositif de lecture des marquages (27) peut être couplé au système de lecture du code (30) marqué sur la tige d'anode (25), de façon à déclencher une alarme s'il y a disconrdance entre les deux lectures.

## AVANTAGES PROCEDURES PAR L'INVENTION

C'est un procédé qui permet un suivi individuel, systématique, complètement automatisable sur la totalité du cycle d'une anode depuis la sortie de la compacteuse jusqu'au retour des mégots dans le chantier de scellement.

### A) Avantages d'un suivi individuel des anodes

1. Repérage des produits aux différents points clés de l'installation :
. Fabrication crue (compactage de la pâte)
. stockage des anodes crues
. enfournement
. banc de contrôle (mesures, carottage)
. stockage des anodes cuites
. scellement des tiges support
. stockage des anodes scellées
. mise en place sur la cuve d'electrolyse
. sortie du mégot d'anode usée
. traitement du mégot (récupération des éléments : carbone, électrolyte, fonte, tiges métalliques).

### 2. Amélioration de la qualité

Par la détermination des facteurs de corrélation, propres à chaque installation, entre les caractéristiques des anodes d'une part, et les caractéristiques de fabrication : matières premières (coke et brai), réglages du cycle de fabrication (malaxage de la pâte carbonée, compactage, cuisson), on peut déterminer l'infuence de ces différents facteurs et les faire varier de façon à optimiser les caractéristiques des anodes. De même, par corrélation entre les caractéristiques des anodes et leur comportement en cours d'électrolyse, on peut optimiser la consommation spécifique d'énergie (kWh/tonne d'Al produit), réduire les incidents dus aux défaillances d'anodes, améliorer les performances de l'électrolyse.

### B) Avantage du marquage des anodes

– Pour réaliser ce suivi individuel, il existe deux voies :
– une voie "logicielle" qui consiste à gérer toutes les manutentions successives que peut subir une anode par un système centralisé.
– une voie "matérielle" qui consiste à marquer chacune des anodes à sa fabrication puis à relire, chaque fois que nécessaire, cette information sur l'anode.

L'avantage de la voie "matérielle" (marquage selon l'invention) réside dans le fait que l'on s'affranchit totalement de toutes les perturbations risquant d'affecter le circuit d'une anode (manutention manuelle parasite, rebut manuel, erreurs ...). L'invention crée en effet un repère physiquement présent sur l'anode et indélébile à tous les stades de sa vie.

### C) Avantage du marquage par empreinte + marquage des tiges

– il est peu coûteux (lecteurs peu sophistiqués, identiques)
– il n'introduit pas de corps étranger dans l'anode. Il est donc "transparent" par rapport au procédé
– il est lisible à toutes les étapes du procédé.

## APPLICATIONS DE L'INVENTION

Bien que l'invention ait été décrite et revendiquée dans le cas particulier du marquage des anodes carbonées destinées à la production d'alumine par électrolyse, il est évident que le procédé décrit peut s'appliquer aux autres produits mis en forme, dont les étapes de fabrication et de mise en oeuvre comportent des opérations multiples et dont on veut suivre l'évolution individuelle. C'est le cas notamment des blocs réfractaires destinés au montage de fours industriels (briques et pièces de formes diverses), à base de produits carbonés (carbone et carbures) et/ou de composés minéraux oxydés (oxydes réfractaires), ou d'autres composés minéraux réfractaires tels que borures, nitrures, oxynitrures, etc...

Le procédé peut, de la même façon, s'appliquer au marquage d'autres types de produits carbonés tels que les électrodes précuites, pour l'électrométallurgie

## Revendications

1. Procédé de marquage individuel des anodes précuites pour la production d'aluminium par électrolyse selon le procédé Hall-Héroult, ce marquage restant lisible depuis le stade de mise en forme de l'anode (1) par compactage à chaud de la pâte carbonée jusqu'à l'opération finale de récupération des composés du mégot d'anode usé, retiré de la cuve d'électrolyse, comportant lors du compactage ou immédiatement après ce compactage, la réalisation dans la partie supérieure de chaque anode (1) d'un marquage sous forme d'une pluralité d'empreintes, en creux et/ou en relief (27) dont l'ensemble constitue un codage digital du numéro d'identification de chaque anode (1) caractérisé en ce que dans le but de lire ce marquage (27) rendu non accessible pendant l'électrolyse, on le complète au moyen d'un marquage de contrôle (30) par répétition du numéro d'identification de chaque anode sur la tige de suspension (25) de cette anode (1) sous forme par exemple de code à barres à lecture optique (30) et en ce que par sécurité d'utilisation on compare la lecture du marquage (27) sur chaque anode avec celle du marquage de contrôle (30) sur la tige de suspension (25) de cette anode (1) de façon à déclencher une alarme en cas de discordance entre les 2 lectures.

2. Procédé de marquage, selon la revendication 1, caractérisé en ce que ce marquage (7) est réalisé en code binaire, le plan de référence de la zone de l'anode (1) supportant le marquage correspondant à un chiffre binaire 0 ou 1 et une cavité ou un bossage en relief correspondant à l'autre chiffre binaire 1 ou 0.

3. Procédé de marquage, selon revendication 1, caractérisé en ce que ce marquage (27) est réalisé en code ternaire, un chiffre ternaire (0, 1 ou 2) étant représenté par le plan de référence de la zone de l'anode (1) supportant le marquage, le second chiffre ternaire étant représenté par un creux de profondeur h, et le troisième chiffre ternaire étant représenté par un creux de profondeur sensiblement supérieure à h, telle que 2 h.

4. Procédé de marquage selon la revendication 1, caractérisé en ce que ce marquage (27) est réalisé en code ternaire dont le troisième chiffre ternaire est représenté par un bossage en relief au-dessus du plan de référence.

5. Procédé de marquage, selon la revendication 1, caractérisé en ce qu'il comporte, en outre, le marquage d'au moins un digit de contrôle de parité.

6. Procédé de marquage, selon revendication 1, caractérisé en ce qu'il comporte, en outre, au moins le marquage d'un digit de contrôle de positionnement de l'anode lors des phases ultérieures de lecture du marquage.

7. Procédé de marquage, selon l'une quelconque des revendications 1 à 6, caractérisé en ce que empreintes constituant le codage digital sont formées par forage de l'anode compactée.

8. Procédé de marquage, selon l'une quelconque des revendications 1 à 7, caractérisé en ce que la lecture du marquage de chaque anode est effectuée simultanément, en parallèle, par un ensemble de palpeur (32) en nombre égal à celui des empreintes de marquage.

9. Procédé de marquage, selon l'une quelconque des revendication 1 à 7, caractérisé en ce que la lecture du marquage de chaque anode est effectuée successivement, en série, par un palpeur unique (32) parcourant les empreintes de marquage.

10 . Application du procédé de marquage, selon l'une des revendications 1 à 9 , au marquage individuel des anodes pour la production d'aluminium des électrodes carbonées pour l'électrométallurgie, et de pièces de formes réfractaires en matériaux carbonés, carburés, oxydés, nitrurés, etc... entrant dans la construction des fours industriels.

## Patentansprüche

1. Verfahren zur individuellen Markierung der vorgebrannten Anoden zur Erzeugung von Aluminium durch Elektrolyse nach dem Hall-Héroult-Verfahren, welche Markierung vom Stadium der Formgebung der Anode (1) durch Warmkompaktierung der kohlenstoffhaltigen Paste bis zum Endvorgang der Erfassung der Verbindungen des aus der Elektrolysewanne entnommenen verbrauchten Anodenrests lesbar bleibt,

das während der Kompaktierung oder unmittelbar nach dieser Kompaktierung im oberen Teil jeder Anode (1) die Anbringung einer Markierung in Form einer Mehrzahl von Hohl- und/oder Reliefprägungen (27) vorsieht, deren Gesamtheit eine Digitalcodierung der Identifizierungsnummer jeder Anode (1) darstellt, dadurch gekennzeichnet,

daß man zwecks Lesens dieser während der Elektrolyse unzugänglich gewordenen Markierung (27) diese mittels einer Kontrollmarkierung (30) durch Wiederholen der Identifizierungsnummer jeder Anode auf der Aufhängestange (25) dieser Anode (1) in Form beispielsweise eines Strichcodes mit optischer Ablesung (30) vervollständigt und daß man zur Betriebssicherheit die Ablesung der Markierung (27) auf jeder Anode (I) mit der der Kontrollmarkierung (30) auf der Aufhängestange (25) dieser Anode (1) derart vergleicht, um im Fall der Ungleichheit zwischen den 2 Ablesungen einen Alarm auszulösen.

2. Markierungsverfahren nach dem Anspruch 1, dadurch gekennzeichnet, daß diese Markierung (27) im Binärcode erfolgt, wobei die Bezugsebene der

Anode (I), die die Markierung trägt, einer Binärziffer 0 oder 1 entspricht und eine Vertiefung oder ein Reliefvorsprung der anderen Binärziffer 1 oder 0 entspricht.

3. Markierungsverfahren nach dem Anspruch 1, dadurch gekennzeichnet, daß diese Markierung (27) im Ternärcode erfolgt, wobei eine Ternärziffer (0, 1 oder 2) durch die Bezugsebene der Zone der Anode (1), die die Markierung trägt, dargestellt wird, die zweite Ternärziffer durch eine Vertiefung der Tiefe h dargestellt wird und die dritte Ternärziffer durch eine Vertiefung wesentlich größerer Tiefe als h, wie z.B. 2 h dargestellt wird.

4. Markierungsverfahren nach dem Anspruch 1, dadurch gekennzeichnet, daß diese Markierung im Ternärcode erfolgt, dessen dritte Ternärziffer durch einen Reliefvorsprung über der Bezugsebene dargestellt wird.

5. Markierungsverfahren nach dem Anspruch 1, dadurch gekennzeichnet, daß es außerdem die Markierung wenigstens einer Gleichheitskontrollziffer aufweist.

6. Markierungsverfahren nach dem Anspruch 1, dadurch gekennzeichnet, daß es außerdem die Markierung einer Ziffer zur Kontrolle der Lage der Anode während der späteren Phasen zum Ablesen der Markierung aufweist.

7. Markierungsverfahren nach irgendeinem der Ansprüche 1-6, dadurch gekennzeichnet, daß die die Digitalcodierung bildenden Prägungen durch Bohren der kompaktierten Anode gebildet werden.

8. Markierungsverfahren nach irgendeinem der Ansprüche 1-7, dadurch gekennzeichnet, daß die Ablesung der Markierung jeder Anode gleichzeitig parallel durch eine Gruppe von Fühlern (32) in gleicher Anzahl wie der der Markierungsprägungen durchgeführt wird.

9. Markierungsverfahren nach irgendeinem der Ansprüche 1-7, dadurch gekennzeichnet, daß die Ablesung der Markierung jeder Anode nacheinander in Reihe durch einen einzigen die Markierungsprägungen überstreichenden Fühler (32) durchgeführt wird.

10. Anwendung des Markierungsverfahrens nach einem der Ansprüche 1-9 auf die individuelle Markierung der Anoden für die Aluminiumerzeugung, der kohlenstoffhaltigen Elektroden für die Elektrometallurgie und von Teilen von feuerfesten Formen aus kohlenstoffhaltigen, karburierten, oxidierten, nitrierten usw. Materialien für den Einbau in Industrieöfen.

## Claims

1. A method for the individual marking of precooked anodes for the production of aluminium by electrolysis by the Hall-Heroult process, this marking remaining legible from the stage where the anode (1) is shaped by hot compaction of the carbonated paste until the final operation of recovery of the components of the butt of the worn anode and withdrawal from the electrolysis tank, comprising during compaction or immediately after compaction, the accomplishment in the upper part of each anode (1) of a marking in the form of a plurality of impressions, recessed and/or in relief (27), the whole of which constitute a digital coding of the identification number of each anode (1), characterised in that with a view to reading this marking (27) which is rendered inaccessible during electrolysis, it is supplemented by a monitoring marking (30) by repetition of the identification number of each anode on the suspension rod (25) of this anode (1) in the form of for example a bar code for visual reading (30) and in that by way of security of use, reading of the marking (27) on each anode is compared with that of the monitoring marking (30) on the suspension rod (25) of this anode (1) in order to trigger an alarm if there is a discrepancy between the two readings.

2. A marking method according to claim 1, characterised in that such marking (7) is carried out in binary code, the reference plane of the zone of the anode (1) which carries the marking corresponding to a binary digit 0 or 1 while a cavity or a relief boss corresponding to the other binary figure represents 1 or 0.

3. A marking method according to claim 1, characterised in that this marking (27) is carried out using a ternary code, a ternary figure (0, 1 or 2) being represented by the reference plane in the zone of the anode (1) which carries the marking, the second ternary digit being represented by a depression of depth h, and the third ternary figure being represented by a depression of a depth substantially greater than h, such as 2 h.

4. A marking method according to claim 1, characterised in that the marking (27) is accomplished in a ternary code, of which the third ternary figure is represented by a boss which stands out in relief above the reference plane.

5. A marking method according to claim 1, characterised in that it also comprises the marking of at least one parity monitoring digit.

6. A marking method according to claim 1, characterised in that it also comprises at least the marking of a digit for monitoring the positioning of the anode during the final phases of reading of the marking.

7. A marking method according to any one of claims 1 to 6, characterised in that the impressions constituting the digital coding are formed by drilling into the compacted anode.

8. A marking method according to any one of claims 1 to 7, characterised in that reading of the marking of each anode is carried out simultaneously in parallel by a number of sensors (32) equal in number to the number of marking impressions.

9. A marking method according to any one of claims 1 to 7, characterised in that reading of the marking of each anode is performed successively in series by a single sensor (32) passing over the marking impressions.

10. Application of the method of marking according to one of claims 1 to 9 to the individual marking of anodes for the production of aluminium from carbonated electrodes for electrometallurgy and of refractory spares consisting of carbonated, carburreted, oxidised, nitrided materials, etc., used in the building of industrial furnaces.

FIG.1

FIG.2

FIG.3

FIC.4

FIC.5

FIC.6

FIG.7

BUS ANODIQUE

FIC.8